# EUROPEAN PATENT APPLICATION

(11) **EP 1 367 520 A1**
(43) Date of publication of application: **03.12.2003**
(21) Application number: 03012027.3
(22) Date of filing: 28.05.2003
(51) Int. Cl.: G06F 17/60

(54) **Project workforce management**

(30) Priority: 29.05.2002 US 159211
(71) Applicant: SAP AG, 69190 Walldorf (DE)
(72) Inventor: Hertel-Szabadi, Martin, Dr., 69123 Heidelberg (DE)
(74) Representative: Sparing - Röhl - Henseler Patentanwälte

(57) **Abstract**

A project workforce management system defines project tasks, project positions, and assigns personnel to the project positions. The project tasks and project positions are correlated to assign a responsible project position or positions to complete each project task. Because each project position may be assigned to a specific person, the qualifications and availabilities of the person can be taken into account when determining the assignment. By correlating the project tasks and project positions, a manager can better control the assignment of the workforce and complete projects more efficiently.

## Description

### TECHNICAL FIELD

This invention relates to project management systems and methods, and more particularly to a software-based system and method for project and workforce management.

### BACKGROUND

Good project management is an important factor to the success of a project. A project may be thought of as a collection of activities and tasks designed to achieve a specific goal of the organization, with specific performance or quality requirements while meeting any subject time and cost constraints. Project management refers to managing the activities that lead to the successful completion of a project. Project management focuses on finite deadlines and objectives. A number of tools may be used to assist with project management and assessment.

Project management may be used when planning of personnel resources and check capacities is desired. The project may be linked to the objects in a professional services life cycle and may accompany the objects from the opportunity over quotation, contract, time and expense (T&E) recording, billing, period-end-activities until the final reporting. Naturally the project gets even more detailed when moving through this cycle.

A project may arise as an opportunity or a request for quotation (inquiry) sent by a potential customer. When the opportunity or request arrives, a decision has to take place by the manager whether the opportunity should be pursued or a quotation be submitted. Even at this early stage, it is important to check whether the company has the necessary capacity and resources with the required skills and qualifications available at the requested time.

For any given project, several project tasks should be defined. Project tasks describe the activities and phases that have to be performed in the project such as writing of blueprints, customizing, testing etc. and can be arranged hierarchically.

What is needed is a system that allows project positions to be correlated with project tasks. Project positions describe project roles like project manager, consultant, tester, etc. Project-positions are typically arranged linearly within the project. By correlating project tasks with project positions, the qualifications and availability of personnel assigned to the project positions may be considered.

### SUMMARY

A project workforce management system defines project tasks, project positions, and assigns personnel to the project positions. The project tasks and project positions are correlated to assign a responsible project position or positions to complete each project task. Because each project position may be assigned to a specific person, the qualifications and availabilities of the person can be taken into account when determining the assignment. By correlating the project tasks and project positions, a manager can better control the assignment of the workforce and complete projects more efficiently.

### DESCRIPTION OF DRAWINGS

These and other features and advantages of the invention will become more apparent upon reading the following detailed description and upon reference to the accompanying drawings.

Figure 1 illustrates the overall structure of a project management system.

Figure 2 illustrates a process for generating a project in a project management system.

Figure 3 illustrates a process for managing workforce resources in a project management system.

### DETAILED DESCRIPTION

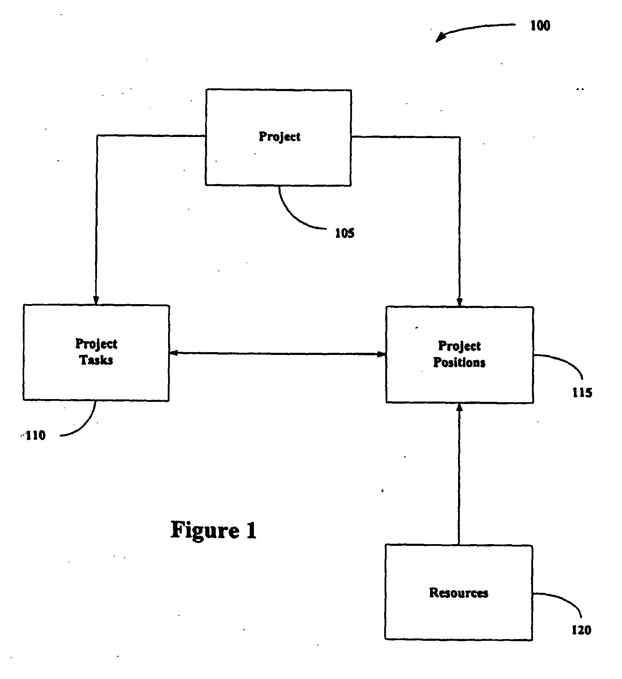

Figure 1 illustrates the overall structure of project management system 100 showing the relationship between a project 105, project tasks 110, project positions 115, and resources 120. The project 100 is a strategy to achieve a defined goal of an organization. The project 100 may be divided into a series of project tasks 110 and/or a series of project positions 115.

The project tasks 110 define activities and phases to be performed in the project 105. For example, for a construction project examples of project tasks 110 may include preparing blue prints, obtaining the proper permits, preparing the foundation, ordering the lumber, hiring subcontractors, etc. The project tasks 110 describe operational activities or phases in the project 105 that should be performed like analysis, business blueprint, implementation, and documentation. The project tasks 110 describe qualification requirements and time demand: To be able, e.g., to write a business blueprint document it is necessary to have attended a specific training session and to be available in the first weeks of September. Project tasks 110 have a hierarchical structure, i.e. tasks can be grouped or split up. Sometimes the refinement and split of tasks into several subtasks occurs at a later time in the life cycle of the project 110.

The project positions 115 define project roles by job title. For the same construction example, project positions 115 may include architect, foreman, electrician, mason, supervisor, etc. The project positions 115 may include qualifications and requirements for each project position 115. Thus, a project position 115 may require availability (such as during the month of July) and certain certifications (such as certification for high voltage installations, professional licenses). The project positions 115 represent roles in the project 105 and describe what roles with what requirements exist in the project 105. The project positions 115 may be described by fields like position type, category, time demand, description, qualification requirements, etc. One example for such a position is the project manager. The qualification requirements for this position might be: account expert, at least two similar projects done, available from September until November for at least 80% of the time. Project positions 115 are non-hierarchical and can be represented by a linear list assigned to a project header. It might be necessary to change the project positions 115. continually during the life cycle of the project 105.

The resources 120 describe a particular person or group that may fill a project position. For a company project 105, the resources 120 may be all the employees of the company. The resources 120 are listed by name and may also include job title, availability, qualifications or other information. The resources 120 may also include any other personnel the company may use, including contractors and temporary workers.

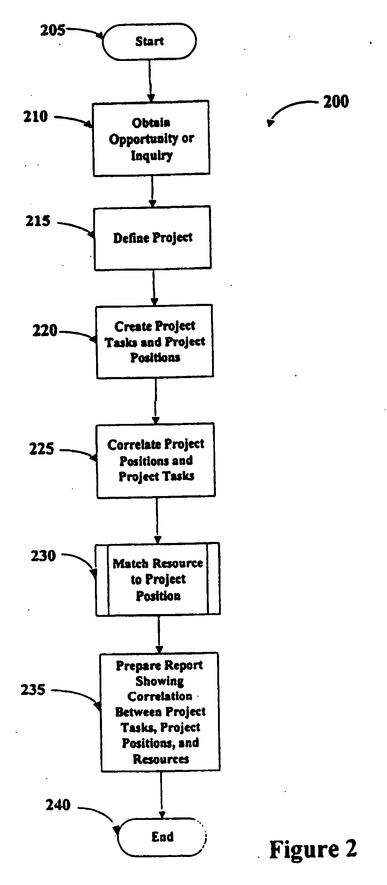

Figure 2 illustrates a process 200 for generating a project in a project management system. The process 200 begins at a START block 205. Proceeding to block 210, an opportunity of inquiry is obtained. An opportunity or inquiry asks for a simple or complex engagement, where one or more persons are required to perform dedicated tasks. This engagement is requested to be performed in a defined time frame.

Proceeding to block 215, the process 200 defines a project 105 based on the opportunity or inquiry. The project 105 may be defined to check whether it is possible and reasonable to make an offer (quotation).

Proceeding to block 220, the requirements and tasks of the project 105 may be structured as project tasks 110 and the positions (roles) have to be estimated and structured as project positions 115. As described above, the project tasks 110 define activities and phases to be performed in the project 105 and the project positions 115 define project roles by job title.

Proceeding to block 225, the project positions 115 and the project tasks 110 are correlated. Within the project 105 a correlation between project positions 115 and project tasks 110 is performed by the project manager or a resource manager. The correlation describes what project position (role) 115 is responsible to work on a project task 110. It is possible to correlate one project position 115 to several project tasks 110. During the correlation of a project position 115 to a project task 110, the project position 115 acts as a supplier or (nominal) resource that fulfills the time demand and qualification requirements of the project task 110. Thus a matching of time and qualification data between project positions 115 and project tasks 110 should be possible.

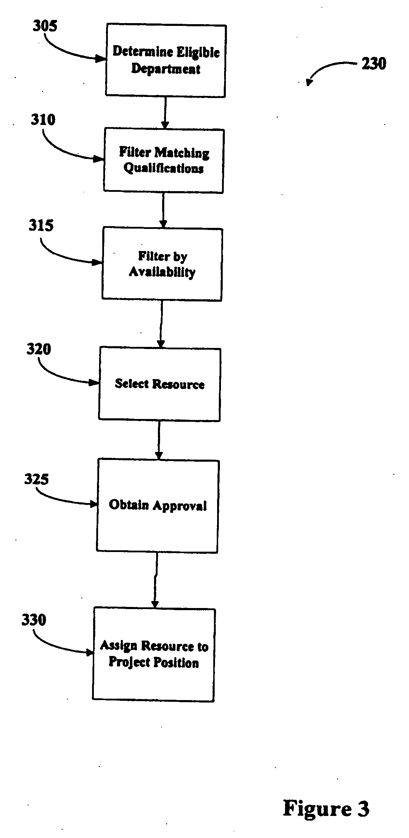

Proceeding to block 230, the process 200 matches resources 120 to project positions 115. Figure 3 illustrates a sub-process for managing workforce resources in a project management system. The searching and assignment of one or more suitable resources 120 to the project 105 may use a search engine that allows suitable resources 120 to be found. The engine may use filter functions to determine the available resources 120 to match with the project positions 115. In block 305, the engine filters the resources 120 according to their assignment to organizational units (e.g. to search only in certain departments). Thus, a program manager may choose to search the entire organization for a resource 120, or may limit the search to one or more departments.

Proceeding to block 310, the engine may further filter the resources by matching qualifications. For example, a project position 115 may require a software programmer familiar with a particular programming language. The engine may compare the resource qualifications to the project position 115 requirements. The qualifications may also include a quality scale.

Proceeding to block 315, the engine may further filter by availability in a specific time frame. The personnel resources 120 may be checked to determine the resources 120 are available in the required time frame. The availability may be determined from shift planning and from the electronic calendar like Lotus Notes or MS Outlook/Exchange of the resource 120. From the point of view of the resource 120, project positions 115 carry time demand and qualification requirements which have to be fulfilled by the resource 120.

Proceeding to block 320, the program manager may now select a resource 120 from all the available resources. Because the filters were used, only qualified, available resources are shown.

Proceeding to block 325, an option may be included that only allows a resource 120 to be assigned to a project position 115 if the resource 120 and the responsible managers have approved. Thus it is possible to send a request to the resource 120 and the responsible manager directly out of the screen where the assignment from resource 120 to the project position 115 occurs.

Proceeding to block 330, when approval is required and received, the program manager may now assign a resource 120 to a project position 115. When a resource 120 that occupies a project position 115 is further assigned to a project task 110, this assignment is called deployment.

Project tasks 110 may describe a demand in a project 105. From the view of the project task 110, the project positions 115 describe a supply. From the view of the resource 120, project positions 115 describe a demand, the resource 120 delivers the supply.

Returning to the process 200 of Figure 2, the process 200 proceeds to block 235 where optional reports may be prepared. An integrated reporting functionality is available within the project 105. The reporting functionality may show all project tasks 110 and resources 120 for a project position 115, all project positions 115 and resources 120 that are assigned to a project task 110, and all project positions 115 and project tasks 110 that are assigned to a resource 120.

These process 200 can be accomplished by a consulting manager or by a (potential) project manager using software on a computer. The project 105 does not have to be highly complex or lengthy. For example, in a case of a so-called spot-consulting scenario (example: a consultant is needed for two days to define a report) the consulting project consists only of one position and the single task is represented by the consulting project itself.

Numerous variations and modifications of the invention will become readily apparent to those skilled in the art. Accordingly, the invention may be embodied in other specific forms without departing from its spirit or essential characteristics.

## Claims

1. A method of project workforce management comprising:
defining one or more project positions;
determining requirements for one of the one or more project positions;
generating a list of matching resources by comparing the requirements of the one or more project positions with a resource database; and
selecting a matching resource and assigning the resource to the project position.

2. The method of Claim 1, further comprising including qualifications as one of the requirements for the project positions.

3. The method of Claim 1, further comprising including availability as one of the requirements for the project positions.

4. The method of Claim 1, further comprising including departmental eligibility as one of the requirements for the project positions.

5. The method of Claim 1, further comprising correlating the one or more project positions to one or more project tasks.

6. The method of Claim 1, further comprising generating a report showing correlation between the one or more project positions and the resources.

7. An article comprising:
a storage medium having stored thereon instructions that when executed by a machine results in the following:
define one or more project positions;
determine requirements for one of the one or more project positions;
generate a list of matching resources by comparing the requirements of the one or more project positions with a resource database; and
select a matching resource and assigning the resource to the project position.

8. The article of Claim 7, wherein qualifications are included as one of the requirements for the project positions.

9. The article of Claim 7, wherein availability is included as one of the requirements for the project positions.

10. The article of Claim 7, wherein departmental eligibility is included as one of the requirements for the project positions.

11. The article of Claim 7, wherein the one or more project positions are correlated to one or more project tasks.

12. The article of Claim 7, wherein a report showing correlation between the one or more project positions and the resources is generated.
